# EUROPEAN PATENT APPLICATION

(11) **EP 2 213 700 A1**
(43) Date of publication of application: **04.08.2010**
(21) Application number: 10156592.7
(22) Date of filing: 09.10.2006
(51) Int. Cl.: C08J 7/04, C09D 183/02, C09D 129/04

(54) **A coating composition having a high oxygen-barrier effect**

(30) Priority: 10.10.2005 IT TO20050718
(62) Divisional of application: 06821178.8
(71) Applicant: P.S.P.-Progetti, Sistemi, Packaging S.r.l., 42021 Bibbiano (RE) (IT)
(72) Inventor: Montenero, Angelo, 43100, Parma (IT); Passera, Marco, 43100, Parma (IT); Roccetti, Marco, 26024, Paderno Ponchielli (Cremona) (IT)
(74) Representative: Gerli, Paolo

(57) **Abstract**

The invention relates to a coating composition comprising from 0.1 to 25% by weight of polyvinyl alcohol and from 0.1 to 30% by weight of a metal alkoxide. The composition is useful to prepare laminated materials having gas-barrier properties, with application particularly in the packaging sector, for instance in the packaging of foodstufts or pharmaceutical products.

## Description

Materials suitable for use as a packaging should possess gas-barrier properties, in particular against oxygen, water vapour, carbon dioxide and other gases which could cause the content of the packaging to deteriorate.

Films and laminated materials having good barrier properties and thus suitable for use in the packaging industry are disclosed in the prior art.

European Patent Application EP 1 384 571 discloses, for example, a laminated material having gas-barrier properties which comprises an intermediate barrier layer interposed between a lower thin layer and an upper thin layer of an inorganic material, these lower, intermediate and upper layers being laminated in this order on a substrate of a plastic material. The intermediate barrier layer is obtained by deposition on the lower thin layer of a coating agent formed by an aqueous composition of a water-soluble polymer, such as polyvinyl alcohol (PVA), and a metal alkoxide such as tetraethoxysilane (TEOS), and subsequent consolidation by heat treatment and drying.

Other prior documents (for instance European Patent Application EP 0 878 495) disclose similar laminated materials comprising a hybrid organic-inorganic barrier layer of the type described above. These laminate materials always include at least one thin layer, generally of an inorganic material such as a metal or a metal oxide, interposed between the hybrid organic-inorganic barrier layer and the substrate of a plastic material, said thin layer being adapted to increase the flexibility and/or the barrier properties of the laminated material and/or to improve the adhesion of the barrier layer to the substrate.

The inventors have now developed a particular coating composition which, when deposited on a substrate of a plastic material and subjected to an appropriate heat treatment, is surprisingly able to provide a laminated material having the necessary barrier and flexibility properties required by applications in the packaging sector, without the need for the use of other intermediate materials between the barrier layer and the substrate of a plastic material. This coating composition further guarantees satisfactory adhesion to the substrate thereby making it possible to eliminate any preliminary operation to activate the substrate. Surprisingly, moreover, this laminate does not lose its barrier properties even when immersed in water for four days at 65°C or exposed to water vapour for 3 days at 65°C. Consequently, the coating composition developed by the inventors enables the production of a simple laminate material of small thickness (the barrier layer having a thickness of approximately 1 µm) which advantageously results in the simplification of preparation procedures and a reduction of the consumption of starting materials, with significant economic and environmental benefits. The invention therefore relates to a laminated material **characterised in that** itcomprises a substrate of a plastic material and at least one hybrid organic-inorganic layer having gas-barrier properties, the barrier layer being formed on at least one surface of the substrate of a plastic material by deposition of an aqueous or hydroalcoholic coating composition according to the invention, comprising from 0.1 to 25% by weight of polyvinyl alcohol and from 0.1 to 30% by weight of a metal alkoxide.

The laminated material of the present invention is therefore **characterised in that** the barrier layer is formed directly on the plastic film acting as a substrate without the interposition of any adhesive material or other intermediate layer. The laminated material may comprise a single barrier layer formed on one surface of the substrate or, as an alternative, two barrier layers each formed on a surface of the substrate of plastic material.

The substrate of plastic material is preferably a film of polyolefin, polyamide or polyester material. Polyethylene (PE), polyethylene terephthalate (PET), polypropylene (PP), oriented polypropylene (OPP), polyester (PET) and nylon 6,6 axe preferred.

The metal alkoxide of the coating composition is a compound which may be represented by the formula MRn, in which M is a metal atom, preferably Si, Al, Zr o Ti, n is the valency of M and the groups R taken n times each independently represent an alkyl or alkyloxy radical having from 1 to 4 carbon atoms (such as methyl, ethyl, propyl, butyl, methoxy, ethoxy, propoxy, butoxy), provided that at least two of the groups R are alkyloxy radicals. The most preferred metal alkoxide is tetraethoxysilane (TEOS) in which M is silicon (Si) , n is 4 and each of the groups R is ethyl.

Polyvinyl alcohol PVA) is a polymer obtained from the basic hydrolysis of polyvinyl acetate and has the following structure: 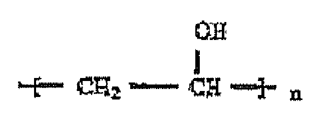 n = from 500 to 5000

Fully hydrolysed PVA (approximately 97-100% of the acetate groups substituted) or partially hydrolysed PVA (approximately 86-89% of the acetate groups substituted), both of which are commercially available, may be used for the preparation of the laminated material of the invention.

The solvent used for the coating composition may be water or a mixture of water and ethyl alcohol, preferably at a v/v ratio between water and ethyl alcohol varying between 100:0 and 70:30.

In order to catalyse the alkoxide hydrolysis and condensation reaction, the pH of the coating composition is preferably adjusted to slightly acidic values, for instance by adding approximately 0.03 to approximately 1% by weight of hydrochloric acid (HCl) .

The preparation of the laminated material of the invention is a very simple method involving a first coating step, during which the coating composition is deposited on at least one surface of the film of a plastic material and a second step to consolidate the barrier layer by heat treatment and optionally drying. Coating may take place by means of the sol-gel method using spraying, dip-coating or spin-coating techniques or any other appropriate conventional technique. The heat consolidation treatment may advantageously be carried out at relatively low temperatures, preferably between 40°C and 90°C, more preferably 60°C, for relatively small times, preferably below 5 minutes, for instance for 60 seconds.

By means of this process and using the components in the ratios set out above, the coating composition deposited has good adhesion, is colourless and provides a laminated material having excellent gas-barrier properties against nitrogen, carbon dioxide, water vapour and in particular oxygen. The barrier values are maintained at high levels even in conditions of high relative humidity, for instance up to a relative humidity of 75%.

Moreover, the barrier layer is preferably transparent. Printing ink and/or a normal adhesive may be applied on it without decrease of the barrier properties. The barrier layer appears completely transparent, colourless and shows no haze phenomena.

As mentioned above, with the hybrid coating of the invention surface modification of the substrate is not usually necessary. A pre-treatment of the corona effect or like type is necessary only in the case of polyethylene or other substrates with a high angle of contact. It is never necessary, however, to include a primer or other intermediate layer between the substrate and the coating layer.

Oxygen-barrier properties are typically measured by means of oxygen permeation (OTR) which is expressed in cm³/m²* day*atm. Materials with values lower than or equal to approximately 0.5 cm³/m²*day*atm are generally considered to have a high barrier effect. The oxygen permeation of the laminated material of the present invention was measured using the MOCON method based on diffusion cells. The instrument used had a detection limit of 0.05 cm³/m²*day*atm.

The characteristics of the material tested were as follows:
- PET substrate of a thickness of 12 and 36 micron;
- coating composition: water 95%, alcohol 15%, 50% PVA, 50% TEOS;
- thickness of the barrier layer: 1 micron.

The measurements were carried out in an environment of varying relative humidity and temperature with an oxygen concentration of 21% (ambient concentration), at a pressure of 1 atm and for a period of approximately 12 hours. The results obtained are shown in the following table.

| **Temperature and substrate thickness** | **Relative humidity (%)** | **OTR (cm³/m²*day*atm)** |
|---|---|---|
| 35°C (12 and 36 µm) | 0 | n.d. |
| 65°C (36 µm) | 0 | 2 |
| 23°C (12 µm) | 50 | n.d. |
| 23°C (12 µm) | 75 | 0.3 |
| n.d. = non-detectable (below the instruments detection limit) | | |

Tests of fragmentation by traction were also carried out in order to be able to obtain the interface shear strength. No fractures were evident even in the case of major deformations. This shows exceptionally good adhesion, together with a high capacity for deformation of the coating layer itself.

## Claims

1. An aqueous or hydroalcoholic coating composition comprising from 0.1 to 25% by weight of polyvinyl alcohol and from 0.1 to 30% by weight of a metal alkoxide.

2. A coating composition according to claim 1, where the metal alkoxide is represented by the formula MRₙ in which M is a metal atom, n is the valency of M and the groups R taken n times each independently represent an alkyl or alkyloxy radical having from 1 to 4 carbon atoms, provided that at least two of the groups R are alkyloxy radicals.

3. A coating composition according to claims 1-2, where M is chosen among Si, Al, Zr o Ti.

4. A coating composition according to claims 1-3, where R is chosen from methyl, ethyl, propyl, butyl, methoxy, ethoxy, propoxy, butoxy.

5. A coating composition according to claims 1-4, where the metal alkoxide is tetraethoxysilane, in which M is Si , n is 4 and each of the groups R is ethyl.

6. A coating composition according to claims 1-5, where the polyvinyl alcohol (PVA) is obtained from the basic hydrolysis of polyvinyl acetate and has the following structure: 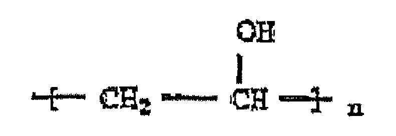 n = from 500 to 5000

7. A coating composition according to claims 1-6, comprising water or a mixture of water and ethyl alcohol

8. A coating composition according to claims 1-7 comprising water and ethyl alcohol at a v/v ratio varying between 100:0 and 70:30.

9. A coating composition according to claims 1-8, having a slightly acidic pH.

10. A coating composition according to claim 9, where the slightly acidic pH is obtained by adding approximately 0.03 to approximately 1% by weight of hydrochloric acid.
